# FASCICULE DE BREVET EUROPEEN

(11) **EP 0 939 015 B1**
(45) Date de publication et mention de la délivrance du brevet: **09.04.2003**
(21) Numéro de dépôt: 99400442.2
(22) Date de dépôt: 24.02.1999
(51) Int. Cl.: B60T 7/10

(54) **Dispositif de commande d'un frein de stationnement pour véhicule automobile**
Steuervorrichtung für Kraftfahrzeugfeststellbremse
Control device for a motor vehicle parking brake

(30) Priorité: 25.02.1998 FR 9802253
(43) Date de publication de la demande: 01.09.1999
(73) Titulaire: AUTOMOBILES PEUGEOT, 75116 Paris (FR); AUTOMOBILES CITROEN, 92200 Neuilly-sur-Seine (FR)
(72) Inventeur: Goly, Fabrice, 95610 Eragny sur Oise (FR)
(74) Mandataire: Gendraud, Pierre

(56) Documents cités:
- FR-A- 917 576
- US-A- 2 170 511
- US-A- 2 220 130

## Description

La présente invention concerne un dispositif de commande d'un frein de stationnement pour véhicule automobile.

Elle se rapporte, plus particulièrement, à un dispositif de verrouillage d'un levier de manoeuvre, commandant les organes de freinage associés aux roues d'un véhicule automobile, apte à pivoter autour d'un axe fixe entre une position de desserrage et une position de serrage des organes de freinage, dans la position de serrage.

De façon générale, les moyens de verrouillage connus sont constitués par une crémaillère fixe et un cliquet mobile porté par le levier de manoeuvre, apte à venir en prise sur la crémaillère pour s'opposer au mouvement de pivotement du levier de manoeuvre vers sa position de desserrage des organes de freinage.

Le cliquet est adapté pour glisser sur la crémaillère lorsque le levier de manoeuvre est entraîné manuellement vers sa position de serrage des organes de freinage.

Un tel dispositif présente l'inconvénient de ne pas verrouiller le levier de manoeuvre suivant l'effort appliqué par le conducteur sur ce dernier, du fait du dimensionnement des crans de la crémaillère, c'est-à-dire que l'effort appliqué par le conducteur pour serrer les organes de freinage, se situe, dans certain cas, entre deux crans juxtaposés, le conducteur ne pouvant exercer une force suffisante pour passer le cran supérieur. De sorte que tout l'effort appliqué entre les deux crans est perdu.

Une solution pour remédier à un tel inconvénient est de diminuer la taille des crans, cependant la tenue du cran sous effort de serrage des organes de freinage impose une cote minimale de la taille des crans.

On connaît, également, par le document brevet FR-A-2 710 429, un levier de frein à main à verrouillage par arc-boutement comportant un guide indépendant du levier et une pièce de blocage apte à être entraînée en déplacement sur le guide par le levier lors de son pivotement vers sa position de serrage du frein, et apte à s'arc-bouter sur le guide pour s'opposer au pivotement du levier de manoeuvre vers sa position de desserrage du frein.

Un tel dispositif permet de résoudre les inconvénients mentionnés ci-dessus. Cependant, ce type de dispositif s'avère relativement coûteux et de réalisation complexe.

On connait également du brevet US 2'170'511, qui est considéré comme l'état de la technique le plus proche, un dispositif de frein à main qui comporte un levier de frein à main dans lequel est monté à pivotement une poignée, le pivotement du levier provoquant celui de la poignée qui vient se bloquer dans une pièce solidaire du plancher du véhicule par l'intermédiaire de multiples pièces. Le blocage de la poignée met sous tension le câble de serrage des organes de serrage du véhicule. Le déverrouillage des organes de serrage est obtenu en rapprochant la poignée du levier.

Un tel dispositif est également coûteux et de réalisation complexe. De plus, le conducteur doit exercer un effort considérable sur la poignée puis sur le levier pour obtenir le déverrouillage, ce qui est inconfortable à l'usage.

Le but de la présente invention est de proposer un dispositif de verrouillage d'un levier de manoeuvre commandant les organes de freinage qui permet de pallier les inconvénients mentionnés ci-dessus.

A cet effet, la présente invention concerne un dispositif de commande d'un frein de stationnement pour véhicule automobile, comprenant un levier de manoeuvre qui est relié par l'intermédiaire d'un câble d'actionnement à des organes de freinage associés aux roues du véhicule, monté à pivotement autour d'un axe fixe entre une position de desserage et une position de serrage des organes de freinage, des moyens de vérrouillage aptes à maintenir le levier de manoeuvre dans sa position de serrage des organes de freinage, et des moyens de déverrouillage pour autoriser le pivotement du levier de manoeuvre vers sa position de désserrage des organes de freinage, caractérisé en ce que les moyens de verrouillage sont constitués d'une pièce de blocage apte à être entraînée en déplacement par le levier de manoeuvre lors de son pivotement vers sa position de serrage et apte à se bloquer dans un espace délimité entre une pièce fixe et une pièce mobile solidaire du levier de manoeuvre de manière à s'opposer au pivotement du levier vers sa position de désserrage et en ce que cette pièce est débloquée par les moyens de déverrouillage.

Le dispositif de commande suivant l'invention peut également comporter une ou plusieurs des caractéristiques suivantes:
- la pièce de blocage est solidaire d'une biellette articulée sur la pièce solidaire du levier de manoeuvre et dépaçable sous l'action des moyens de déverrouillage;
- la pièce fixe est pourvue d'une face latérale concave apte à coopèrer avec l'une des faces latérales de la pièce de blocage;
- la pièce mobile est constituée, en coupe longitudinal, d'un secteur angulaire;
- le rayon de courbure de la face latérale concave est plus importante que celui du secteur angulaire de la pièce mobile;
- la biellette à la forme sensiblement d'un coude dont l'une de ses extrémités libre est reliée aux moyens de déverrouillage et l'autre de ses extrémités est reliée à la pièce de blocage;
- les moyens de déverrouillage sont constitués d'une tringle de commande disposée à l'intérieur du levier de manoeuvre et déplaçable en translation sous l'action d'un bouton poussoir monté à coulissement à l'extrémité libre du levier;
- l'espace présente une section variable décroissante en direction du plancher.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en coupe d'un levier de manoeuvre commandant les organes de freinage selon la présente invention,
- la figure 2 est une vue en coupe suivant la ligne II-II de la figure 1.

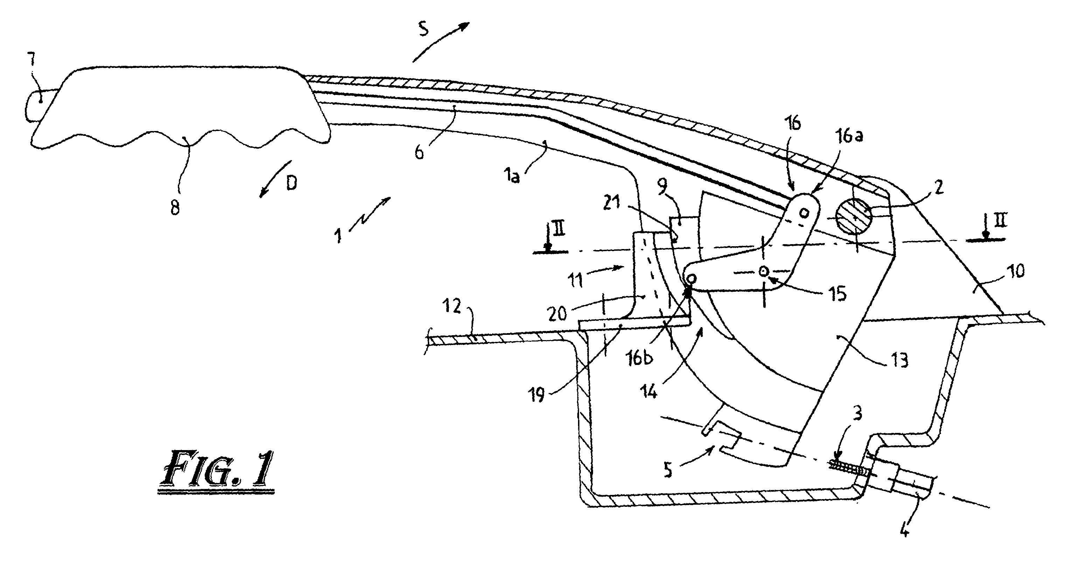

On a représenté à la figure 1, un levier de manoeuvre 1, désigné également frein à main, apte à pivoter autour d'un axe fixe 2, perpendiculaire à la direction longitudinale du véhicule, entre une position dite de desserrage, telle que représentée, et une position dite de serrage par pivotement du levier suivant la flèche S, de manière à transmettre à des organes de freinage, non représentés, associés aux roues avant ou arrière du véhicule, par l'intermédiaire d'un câble 3 coulissant dans une gaine 4, un effort de serrage quand le levier 1 est en position de serrage. L'une des extrémités du câble 3 est reliée, de manière connue, au levier 1, par exemple, au moyen d'un embout cylindrique, non représenté, disposé dans un logement 5 solidaire du levier 1.

On notera que l'axe fixe est solidaire d'un support 10 fixé au plancher 12 du véhicule.

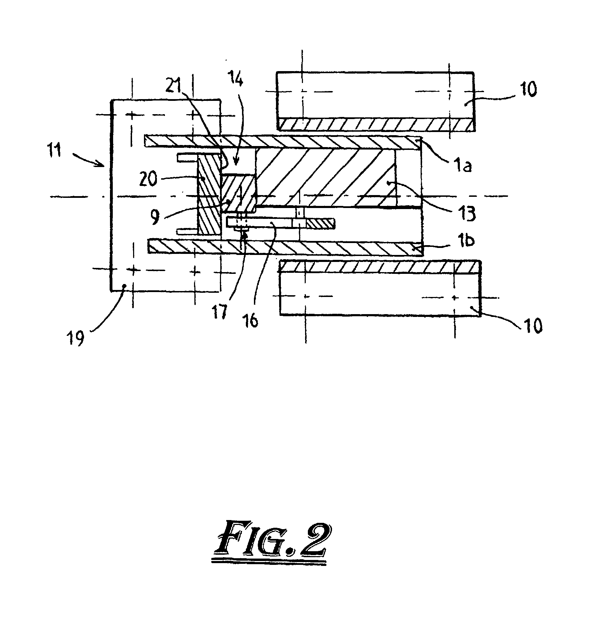

Le levier de manoeuvre 1 est constitué de manière classique de deux flasques 1a et 1b, comme visible à la figure 2, à l'intérieur duquel est montée à déplacement une tringle de commande 6, reliée à l'une de ses extrémités à un bouton poussoir 7 monté à coulissement dans une poignée 8 fixée à l'extrémité libre du levier 1 et qui est saillant de cette dernière.

selon la présente invention, le levier de manoeuvre est muni d'une part de moyens de verrouillage aptes à maintenir ce dernier dans la position de serrage des organes de freinage et d'autre part de moyen de déverrouillage autorisant le pivotement du levier vers sa position de desserrage des organes de freinage.

Les moyens de verrouillage sont constitués d'une pièce de blocage 9 qui est conformée de manière à être entraînée en déplacement par le levier 1 lors de son pivotement vers sa position de serrage, représentée par la flèche S, et à se bloquer, notamment par coincement, dans un espace 14 délimité entre une pièce fixe 11 reliée au plancher 12 du véhicule et une pièce mobile 13 solidaire du levier 1, de manière à s'opposer au pivotement du levier vers sa position de desserrage, représentée par la flèche D.

La pièce mobile 13 est constituée, suivant une coupe longitudinale, d'un secteur angulaire qui est solidaire, par exemple par soudure, d'un flasque la du levier 1, comme visible à la figure 2.

On comprendra, bien entendu, que ce secteur angulaire peut également être réalisé monopièce avec le flasque qui lui correspond.

La pièce de blocage 9, présente la forme générale d'une griffe, et est reliée à une biellette 16 articulée autour d'un axe 15 solidaire du secteur angulaire constituant la pièce mobile 13 qui est déplaçable sous l'action des moyens de déverrouillage.

La biellette 16 présente sensiblement la forme d'un coude et est reliée à l'une des ses extrémités 16a, à l'extrémité libre de la tringle de commande 6, et à l'autre extrémité 16b à la pièce de blocage 14 par l'intermédiaire d'un axe 17.

Les moyens de déverrouillage sont constitués de la tringle de commande 6 déplaçable en translation sous l'action du bouton poussoir 7 monté à coulissement dans la poignée 8.

On notera que la biellette 16 est liée respectivement à la pièce de blocage 9 et à la tringle 6 par des liaisons pivots de manière à permettre des débattements angulaires de ces dernières.

La pièce fixe 11 est constituée, avantageusement, d'une platine 19 fixée par visserie sur le plancher 12 et d'une partie 20 saillant verticalement de cette dernière en direction opposée au plancher, qui est pourvue d'une face latérale concave 21 apte à coopérer avec l'une des faces de la pièce de blocage 9.

On notera que le rayon de courbure de la face latérale concave 21 est plus importante que celui du secteur angulaire de la pièce mobile 13 formant ainsi un espace 14 qui présente, une section variable décroissante en direction du plancher.

On notera que la courbure de la surface est telle qu'elle permet aisément un débattement de la biellette 16, lorsque celle-ci est actionnée par l'intermédiaire du bouton poussoir 7.

Le fonctionnement du dispositif de commande du frein de stationnement, selon la présente invention, va maintenant être décrit en référence aux figures 1 et 2.

Pour serrer les organes de freinage du véhicule, on relève le levier de manoeuvre 1 suivant la flèche S entraînant ainsi le glissement de la pièce de blocage 9 du fait de sa forme en griffe sur la surface concave 21 de la pièce fixe 11, ce qui a tendance à faire rentrer le bouton poussoir 7 dans la poignée 8 par pivotement de la biellette 16.

Une fois que le levier 1 a atteint sa position haute de serrage des organes, le bouton poussoir 7 rappelé dans sa position initiale de repos par un moyen classique de rappel élastique, par exemple, un ressort, ainsi que la tension du câble sur le levier ont tendance à entraîner la pièce de blocage 9 -ou griffe- dans l'espace 14 délimité par la pièce fixe 11 et la pièce mobile 13 qui automatiquement par sa forme se coince dans ledit espace 14, immobilisant ainsi en rotation le levier 1.

Pour desserrer les organes de freinage, il suffit de relever légèrement le levier 1 et d'actionner le bouton poussoir 7 ce qui exerce une poussée sur la tringle de commande 6 qui fait pivoter la biellette 16 suivant le sens horaire autour de l'axe 15, entraînant la griffe 9 verticalement vers le haut, en direction opposée au plancher, de manière à la débloquer de l'espace 14 formé par les pièces 11 et 13 et à autoriser le basculement vers le bas du levier 1. Ce dernier redescend ainsi, avantageusement, sans effort de la part du conducteur.

Avantageusement, on comprend à la lecture de la description ci-dessus, que le dispositif de la présente invention est particulièrement simple et peu coûteux à réaliser.

Bien que l'invention ait été décrite en liaison avec un mode de réalisation particulier elle comprend tous les équivalents techniques des moyens décrits.

## Revendications

1. Dispositif de commande d'un frein de stationnement pour véhicule automobile, comprenant un levier de manoeuvre (1) qui est relié par l'intermédiaire d'un câble (3) d'actionnement à des organes de freinage associés aux roues du véhicule, monté à pivotement autour d'un axe fixe (2) entre une position de desserage et une position de serrage des organes de freinage, des moyens de vérrouillage aptes à maintenir le levier de manoeuvre dans sa position de serrage des organes de freinage, et des moyens de déverrouillage pour autoriser le pivotement du levier de manoeuvre vers sa position de désserrage des organes de freinage, dans lequel les moyens de verrouillage sont constitués d'une pièce de blocage (9) apte à être entraînée en déplacement par le levier de manoeuvre (1) lors de son pivotement vers sa position de serrage et apte à se bloquer dans un espace (14) délimité entre une pièce fixe (11) et une pièce mobile (13) solidaire du levier de manoeuvre (1) de manière à s'opposer au pivotement du levier vers sa position de desserrage et *apte à être* débloquée par les moyens de déverrouillage, **caractérisé en ce que** la pièce de blocage (9) est solidaire d'une biellette (16) ayant la forme sensiblement d'un coude dont l'une de ses extrémités libre (16a) est reliée aux moyens de déverrouillage (6, 7) et l'autre de ses extrémités (16b) est reliée à la pièce de blocage (9) et articulée sur la pièce mobile (13) solidaire du levier de manoeuvre (1) et déplaçable sous l'action des moyens de déverrouillage et **en ce que** les moyens de déverrouillage sont constitués d'une tringle de commande (6) disposée à l'intérieur du levier de manoeuvre (1) et déplaçable en translation sous l'action d'un bouton poussoir (7) monté à coulissement à l'extrémité libre du levier (1).

2. Dispositif selon la revendication 1, **caractérisé en ce que** la pièce fixe (11) est pourvue d'une face latérale concave (21) apte à coopèrer avec l'une des faces latérales de la pièce de blocage (9).

3. Dispositif selon la revendication 2, **caractérisé en ce que** la pièce mobile (13) est constituée, en coupe longitudinale, d'un secteur angulaire.

4. Dispositif selon la revendication 3, **caractérisé en ce que** le rayon de courbure de la face latérale concave (21) est plus importante que celui du secteur angulaire de la pièce mobile (13).

5. Dispositif selon l'une quelconque des revendications précédentes, **caractérisé en ce que** l'espace (14) présente une section variable décroissante en direction du plancher (12) du véhicule.

6. Dispositif selon l'une quelconque des revendications précédentes, **caractérisé en ce que** la pièce de blocage (9) présente la forme générale d'une griffe.

## Claims

1. Control device for a parking brake of a motor vehicle, comprising an operating lever (1) that is connected via an actuation cable (3) to braking members associated with the wheels of the vehicle, mounted so as to pivot about a fixed axis (2) between a position for loosening and a position for tightening the braking members, locking means capable of holding the operating lever in its position for tightening the braking members, and unlocking means to allow the operating lever to pivot towards its position for loosening the braking members, in which the locking means are constituted by a locking part capable of being driven in displacement by the operating lever (1) during its pivoting towards its tightening position and capable of being locked within a space (14) delimited between a fixed part (11) and a movable part (13) integral with the operating lever (1) so as to oppose the pivoting of the lever towards its loosening position and capable of being freed by the unlocking means, **characterised in that** the locking part (9) is integral with a substantially elbow-shaped link (16), with one of its free ends (16a) connected to the unlocking means (6, 7) and the other of its ends (16b) connected to the locking part (9) and articulated to the movable part (13) integral with the operating lever (1) and displaceable by the action of the unlocking means and **in that** the unlocking means are constituted by a control rod (6) arranged within the operating lever (1) and displaceable in translation by the action of a pushbutton (7) slidably mounted at the free end of the lever (1).

2. Device according to Claim 1, **characterised in that** the fixed part (11) is provided with a concave side face (21) capable of co-operating with one of the side faces of the locking part (9).

3. Device according to Claim 2, **characterised in that** the movable part (13) is constituted, in longitudinal section, by an angular sector.

4. Device according to Claim 3, **characterised in that** the radius of curvature of the concave side face (21) is greater than that of the angular sector of the movable part (13).

5. Device according to any one of the preceding claims, **characterised in that** the space (14) has a variable section decreasing in the direction of the floor (12) of the vehicle.

6. Device according to any one of the preceding claims, **characterised in that** the locking part (9) is generally claw-shaped.

## Patentansprüche

1. Steuervorrichtung einer Kraftfahrzeugfeststellbremse, die einen Betätigungshebel (1) aufweist, der durch ein Betätigungskabel (3) an Bremsorgane, die mit den Fahrzeugrädern Kontakt haben, verbunden ist, um eine feste Achse (2) schwenkend, zwischen einer Lösestellung und einer Blockierstellung der Bremsorgane, Verriegelungsmittel, die den Betätigungshebel in seiner Blockierstellung der Bremsorgane halten, sowie Entriegelungsmittel, die das Schwenken des Betätigungshebels zu seiner Lösestellung der Bremsorgane ermöglichen, Vorrichtung, in welcher die Verriegelungsmittel ein Blockierstück (9) bilden, das vom Betätigungshebel (1) während seines Schwenkens zu seiner Lösestellung bewegt werden kann und sich in einem abgegrenzten Bereich (14) zwischen einem festen Teil (11) und einem beweglichen Teil (13) des Betätigungshebels (1) verriegeln kann, so dass es dem Schwenken des Hebels zu seiner Lösestellung entgegenwirkt und von den Entriegelungsmitteln entriegelt werden kann,
**dadurch gekennzeichnet, dass** das Blockierstück (9) fest mit einem stark gebogenen Schwingarm (16) verbunden ist, dessen eines seiner freien Enden (16a) an den Entriegelungsmitteln (6, 7) befestigt ist und dessen anderes Ende (16b) am Blockierstück (9) befestigt ist, sowie am beweglichen Teil (13) angelenkt ist, das fest mit dem Betätigungshebel (1) verbunden ist und unter Betätigung der Entriegelungsmittel verschiebbar ist,
und dadurch dass die Entriegelungsmittel ein Steuerstange (6) bilden, die sich im Inneren des Betätigungshebels (1) befindet und in Verschiebungsrichtung unter der Betätigung eines Druckknopfes (7), der gleitend am freien Ende des Hebels (1) befestigt ist, verschoben werden kann.

2. Vorrichtung nach Anspruch 1, **dadurch gekennzeichnet, dass** der feste Teil (11) eine konkave Seitenfläche (21) aufweist, die mit einer der beiden Seitenflächen des Blockierstücks (9) zusammenwirken kann.

3. Vorrichtung nach Anspruch 2, **dadurch gekennzeichnet, dass** der bewegliche Teil (13) im Längsschnitt einen winkeligen Sektor bildet.

4. Vorrichtung nach Anspruch 3, **dadurch gekennzeichnet, dass** der Krümmungsradius der konkaven Seitenfläche (21) größer ist, als der des winkeligen Sektors des beweglichen Teils (13).

5. Vorrichtung nach einer der vorhergehenden Ansprüche, **dadurch gekennzeichnet, dass** der Bereich (14) ein in Richtung des Bodens (12) des Fahrzeugs abnehmendes variables Segment ist.

6. Vorrichtung nach einer der vorhergehenden Ansprüche, **dadurch gekennzeichnet, dass** das Blockierstück (9) die allgemeine Form einer Klaue aufweist.
